(19) Europäisches Patentamt
European Patent Office
Office européen des brevets

(11) Veröffentlichungsnummer: **0 081 169**
**B1**

(12) # EUROPÄISCHE PATENTSCHRIFT

(45) Veröffentlichungstag der Patentschrift: **06.02.85**

(51) Int. Cl.⁴: **C 09 B 1/48,** C 07 C 97/24

(21) Anmeldenummer: **82110972.5**

(22) Anmeldetag: **27.11.82**

(54) **Verfahren zur Herstellung von 4,4'-Diamino-1,1'-dianthrimiden.**

(30) Priorität: **09.12.81 DE 3148693**

(43) Veröffentlichungstag der Anmeldung: **15.06.83 Patentblatt 83/24**

(45) Bekanntmachung des Hinweises auf die Patenterteilung: **06.02.85 Patentblatt 85/6**

(84) Benannte Vertragsstaaten: **CH DE FR GB LI**

(56) Entgegenhaltungen:
**DE - B - 1 085 991**
**DE - B - 1 191 061**
**FR - A - 2 372 207**
**US - A - 1 994 622**

**HOUBEN-WEYL, Band 7, Teil III, 4. Auflage, Chinone, Georg Thieme Verlag, Stuttgart, DE, Seite 213**

(73) Patentinhaber: **BAYER AG, Konzernverwaltung RP Patentabteilung, D-5090 Leverkusen 1 Bayerwerk (DE)**

(72) Erfinder: **Stawitz, Josef, Dr., Gerstenkamp 21, D-5000 Köln 80 (DE)**

**EP 0 081 169 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von 4,4'-Diamino-1,1'-dianthrimiden, das dadurch gekennzeichnet ist, dass man ein Gemisch aus einem gegebenenfalls substituierten 1,4-Diaminoanthrachinon und einem gegebenenfalls substituierten 1-Aminoanthrachinon in 30-60%iger $H_2SO_4$, vorzugsweise 40-60%iger $H_2SO_4$, mit Peroxomonoschwefelsäure oder Peroxodischwefelsäure, die vorzugsweise in Form der Alkali- oder Ammoniumsalze eingesetzt werden, oxidiert und dass man anschliessend den Ansatz reduziert. Vorzugsweise setzt man die beiden Ausgangskomponenten in das erfindungsgemässe Verfahren im Molverhältnis gegebenenfalls substituiertes 1-Aminoanthrachinon zu gegebenenfalls substituiertes 1,4-Diaminoanthrachinon wie 0,9 : 1 bis 1,4 : 1, besonders bevorzugt wie 1 : 1 bis 1,1 : 1 ein.

Es empfiehlt sich, ein feinverteiltes Gemisch der Anthrachinone einzusetzen.

Im allgemeinen wird die Oxidation bei Temperaturen von etwa 0 bis etwa 80, vorzugsweise etwa 30 bis etwa 60° C durchgeführt.

Besonders bevorzugtes Oxidationsmittel ist Kaliumperoxodisulfat.

4,4'-Diamino-1,1'-dianthrimide lassen sich im wesentlichen nach zwei Verfahren herstellen:

1. Kondensation von gegebenenfalls substituiertem 1-Chloranthrachinon mit einem gegebenenfalls substituierten 1-Aminoanthrachinon unter Kupferkatalyse gemäss einer Ullmann-Reaktion („Ullmanns Enzyklopädie der techn. Chemie", Bd. 7, S. 585, 3. Aufl., 1974), Nitrierung des entstandenen, in 4,4'-Stellung unsubstituierten Dianthrimid in Borschwefelsäure und Reduktion des erhaltenen 4,4'-Dinitro 1,1'-dianthrimid.

2. Kondensation von gegebenenfalls substituiertem 4-Benzoylamino-1-chloranthrachinon mit gegebenenfalls substituiertem 1-Amino-4-benzoylaminoanthrachinon unter Kupferkatalyse und Verseifung der Benzoylaminogruppen gemäss dem Verfahren der CH-PS Nr. 573959.

Die Oxidation eines Gemisches von 1,4-Diaminoanthrachinon und 1-Aminoanthrachinon zum 4,4'-Diaminodianthrimid ist aus Houben-Weyl (Bd. 7, Teil 3, S. 213, 4. Aufl.) bekannt. Nach dieser Literaturstelle soll das Dianthrimid entstehen, wenn man die genannten Komponenten in 85 bis 96%iger $H_2SO_4$ mit Braunstein behandelt. Die Nacharbeitung ergibt, dass gerade in der hochkonzentrierten $H_2SO_4$ die Reaktion gar nicht, oder aber mit äusserst unbefriedigendem Ergebnis hinsichtlich Ausbeute und Qualität des Endproduktes abläuft.

Überraschenderweise gelingt es nach dem erfindungsgemässen Verfahren, in kurzer Zeit und in guten Ausbeuten 4,4'-Diaminodianthrimide grosser Reinheit herzustellen.

Besonders überraschend ist,

a) dass das unter den Oxidationsbedingungen intermediär gebildete, hydrolyseempfindliche Anthrachinon-1,4-diimin in der stark wasserhaltigen $H_2SO_4$ fast quantitativ mit 1-Aminoanthrachinon zum 4,4'-Diaminodianthrimid reagiert;

b) dass unter den Reaktionsbedingungen das bereits gebildete Dianthrimid bzw. sein Chinonimin, wenn überhaupt, nur in sehr geringem Umfang zu 1,4-Diaminoanthrachinon und 4-Amino-1-hydroxyanthrachinon hydrolysiert wird;

c) dass, wenn überhaupt nur in sehr geringem Umfang die Konkurrenzreaktion der Selbstkondensation von 1-Aminoanthrachinon zu Aminotri- oder -polyanthrimiden gemäss der DE-AS Nr. 1085991 stattfindet.

Das erfindungsgemässe Verfahren ist bekannten Verfahren weiterhin durch seine Einfachheit, die Kürze der Durchführung, den Verzicht auf organische Lösungsmittel und Schwermetallverbindungen überlegen. Darüber hinaus werden mit diesem Verfahren 4,4'-Diaminodianthrimide leicht zugänglich, die nach den bekannten Verfahren nur schwer herzustellen sind.

Vorzugsweise werden beim erfindungsgemässen Verfahren pro Mol gegebenenfalls substituiertes 1,4-Diaminoanthrachinon etwa 1,0 bis etwa 2,5 mol Oxidationsmittel, insbesondere 1,6 bis 2,2 mol eingesetzt.

Durch Zusatz von Schwermetallsalzen oder -oxiden, wie $MnO_2$, $KMnO_4$, $CrO_3$, $K_2Cr_2O_7$, $Na_2Cr_2O_7$ u.a. kann die Oxidation beschleunigt werden. Der Zusatz der Schwermetallverbindungen erfolgt vorzugsweise in katalytischen Mengen.

Zur Reduktion können die bekannten, in schwefelsaurem Medium wirksamen Reduktionsmittel wie $SnCl_2$, $FeSO_4$, $SO_2$ Di- und Trihydroxybenzole, Alkalisalze der Oxo- und Thiosäuren von niederwertigen Schwefel sowie Sauerstoffsäuren von Phosphor niedriger Oxidationsstufen sowie ihre Salze verwendet werden. Bevorzugte Reduktionsmittel sind $FeSO_4$, $Na_2SO_3$, $NaHSO_3$ sowie $H_3PO_2$ und ihre Alkalisalze. Naturgemäss können auch Gemische der genannten Reduktionsmittel eingesetzt werden.

Vorzugsweise werden in das Verfahren 1-Aminoanthrachinone der Formel

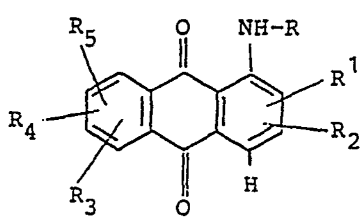

(I)

in der

R Wasserstoff, Alkyl, insbesondere $C_1$-$C_6$-Alkyl, Cycloalkyl, insbesondere $C_3$-$C_7$-Cycloalkyl, Aryl, insbesondere Phenyl und Naphthyl, Aralkyl, insbesondere Phenyl-$C_1$-$C_6$-alkyl, wobei die genannten Kohlenwasserstoffreste substituiert sein können, und

$R_1$, $R_2$, $R_3$, $R_4$, $R_5$ Wasserstoff, Halogen, insbesondere Cl und Br, $-NO_2$, $-SO_3H$, $-COOH$, $-OH$, $-NH_2$, $-CN$, Arylamino, insbesondere Phenyl- und Naphthylamino, Alkylamino, insbesondere $C_1$-$C_6$-Alkylamino, Alkyl, insbesondere $C_1$-$C_6$-Alkyl, Cycloalkyl, insbesondere $C_3$-$C_7$-Cyclo-

alkyl, Aryl, insbesondere Phenyl und Naphthyl, Aralkyl, insbesondere Phenyl-$C_1$-$C_6$-alkyl, Alkoxy, insbesondere $C_1$-$C_6$-Alkoxy und Aryloxy insbesondere Phenoxy bezeichnen, eingesetzt.

R steht bevorzugt für Wasserstoff.

$R_1$, $R_2$, $R_3$, $R_4$, $R_5$ stehen bevorzugt für Wasserstoff, Cl, Br, $-SO_3H$, $-COOH$, $-OH$, $-NH_2$, $-CN$, $-NO_2$, $C_1$-$C_4$-Alkyl insbesondere Methyl und Ethyl, Phenyl, $C_1$-$C_4$-Alkylamino, Phenylamino.

Beispielhaft seien genannt: 1-Aminoanthrachinon, 1-Amino 5-chloranthrachinon, 1-Amino-8-chloranthrachinon, 1-Amino-5,8-dichloranthrachinon, 1-Aminoanthrachinon-1-sulfosäure, 1-Aminoanthrachinon-8-sulfosäure, 1-Amino-6-hydroxyanthrachinon, 1,5-Diaminoanthrachinon, 1,8-Diaminoanthrachinon, 1,5-Diamino-4-chloranthrachinon, 1-Amino-5-nitroanthrachinon, 1-Amino-8-nitroanthrachinon, 1-Amino-2-methylanthrachinon, 1-Amino-5-phenylaminoanthrachinon, 1-Amino-8-phenylaminoanthrachinon, 1-Amino-5-methylaminoanthrachinon, 1-Amino-8-methylaminoanthrachinon.

Insbesondere wurden in das erfindungsgemässe Verfahren 1,4-Diaminoanthrachinone der Formel

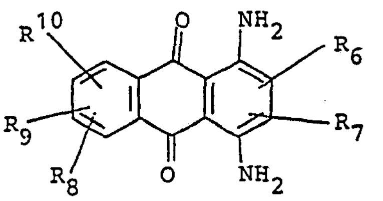
(II)

eingesetzt.

In Formel II bezeichnen: $R_6$, $R_7$, $R_8$, $R_9$, $R_{10}$ Wasserstoff, Halogen, insbesondere Cl und Br, $-NO_2$, $-SO_3H$, $-COOH$, $-OH$, $-NH_2$, $-CN$, Arylamino, insbesondere Phenyl- und Naphthylamino, Alkylamino, insbesondere $C_1$-$C_6$-Alkylamino, Alkyl, insbesondere $C_1$-$C_6$-Alkyl, Cycloalkyl, insbesondere $C_3$-$C_7$-Cycloalkyl, Aryl, insbesondere Phenyl und Naphthyl, Aralkyl, insbesondere Phenyl-$C_1$-$C_6$-alkyl. Alkoxy, insbesondere $C_1$-$C_6$-Alkoxy und Aryloxy, insbesondere Phenoxy. $R_6$, $R_7$, $R_8$, $R_9$, $R_{10}$ stehen bevorzugt für Wasserstoff, Cl, Br, $-SO_3H$, $-COOH$, $-OH$, $-NH_2$, $-NO_2$, $-CN$, $C_1$-$C_4$-Alkyl, insbesondere Methyl und Ethyl, $C_1$-$C_4$-Alkylamino, Phenylamino.

Beispielsweise seien genannt: 1,4-Diaminoanthrachinon, 1,4-Diaminoanthrachinon-5-sulfosäure, 1,4-Diaminoanthrachinon-6-sulfosäure, 1,4-Diaminoanthrachinon-7-sulfosäure, 1,4-Diaminoanthrachinon-8-sulfosäure, 1,4-Diamino-5-chloranthrachinon, 1,4-Diamino-6-chloranthrachinon, 1,4-Diamino-7-chloranthrachinon, 1,4-Diamino-8-chloranthrachinon, 1,4-Diamino-5-bromanthrachinon, 1,4-Diamino-6-bromanthrachinon, 1,4-Diamino-7-bromanthrachinon, 1,4-Diamino-8-bromanthrachinon, 1,4-Diamino-5,8-dichloranthrachinon, 1,4-Diamino-5-nitroanthrachinon, 1,4-Diamino-2-methylanthrachinon, 1,4-Diamino-2-carboxyanthrachinon, 1,4-Diamino-2-nitroanthrachinon, 1,4-Diamino-2,3-dichloranthrachinon, 1,4-Diamino-2,3-dicyananthrachinon.

Ersetzt man im erfindungsgemässen Verfahren gegebenenfalls substituiertes 1-Aminoanthrachinon durch gegebenenfalls substituiertes 1,5- bzw. 1,8-Diaminoanthrachinon, so lässt sich bei Anwendung von 1,8 bis 2,0 mol 1,4-Diaminoanthrachinon auch die doppelte Umsetzung zum Tetraaminotrianthrimid gemäss

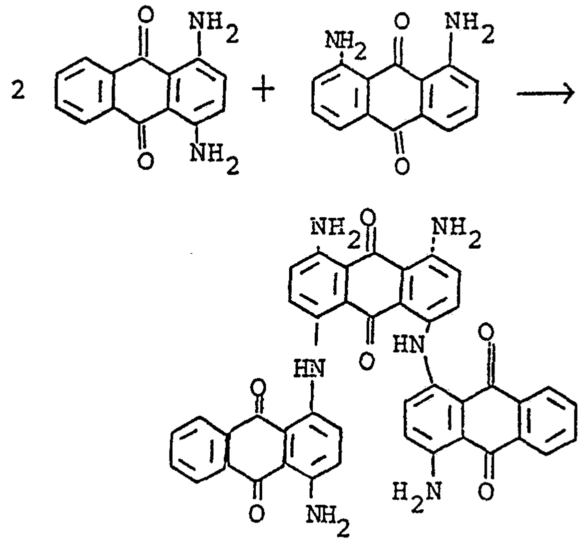

erreichen.

Beim erfindungsgemässen Verfahren kann eine Suspension von fein gemahlenem gegebenenfalls substituiertem 1-Aminoanthrachinon und gegebenenfalls substituiertem 1,4-Diaminoanthrachinon in 30-60%iger $H_2SO_4$ oxidiert werden. Bevorzugt werden das 1-Aminoanthrachinon und das 1,4-Diaminoanthrachinon nacheinander, aus ökonomischen Gründen ganz besonders bevorzugt gemeinsam verpastet, da diese Arbeitsweise keine Nachteile hinsichtlich der Qualität der Produkte hat.

Das Oxidationsmittel kann dabei in Wasser oder in einem Schwefelsäure/Wasser-Gemisch vorgelegt und das schwefelsaure Gemisch der Aminoanthrachinone zugetropft werden. Vorteilhafterweise dosiert man jedoch zur Paste der Aminoanthrachinone das Oxidationsmittel kontinuierlich oder portionsweise zu. Die Zugabe des Oxidationsmittels kann innerhalb 0,5-5 h erfolgen.

Die Reaktion des 1,4-Chinonimin mit dem 1-Aminoanthrachinon erfolgt meist bereits bei tiefer Temperatur rasch. Aus ökonomischen Gründen und aus Gründen der Rührbarkeit – besonders bei konzentriertem Reaktionsansatz – wird bei der Umsetzung eine Temperatur von 10-60, insbesondere 30-50° C, bevorzugt. Die Umsetzung ist ca. 0,5-2 h nach Zugabe des Oxidationsmittels vollständig abgelaufen. Der Verlauf der Reaktion kann analytisch verfolgt werden, z.B. lässt sich nach bekannten chromatographischen Verfahren die Menge der Ausgangskomponenten rasch ermitteln.

Die eingesetzte Menge an Schwefelsäure wird von der Löslichkeit der Aminoanthrachinone in Schwefelsäure und von der Rührbarkeit der Paste

bzw. Oxidationsschmelze bestimmt. Im allgemeinen werden etwa 10 bis etwa 40 Gew.-Teile 40-60%ige $H_2SO_4$ pro Gewichtsteil 1,4-Diaminoanthrachinon verwendet.

Die Reduktion der entstehenden Chinonimine der Diaminodianthrimide kann mit Reduktionsmitteln in Substanz oder in Form von beispielsweise wässerigen Lösungen durchgeführt werden. Dabei kann man sowohl die Oxidationsschmelze zu vorgelegtem Reduktionsmittel geben als auch das Reduktionsmittel der Schmelze zudosieren, wobei die letztere Arbeitsweise den Vorteil hat, dass Oxidation und Reduktion im gleichen Gefäss ausgeführt werden können. Zur Vervollständigung der Reduktion kann erwärmt werden.

Eine andere Möglichkeit besteht darin, das noch vollständig oder teilweise oxidierte Diaminodianthrimid zu isolieren und anschliessend z.B. durch Behandeln mit wässerigen Lösungen der Reduktionsmittel zu reduzieren.

Besonders ökonomisch wird das beanspruchte Verfahren dadurch, dass man das 1,4-Diaminoanthrachinon durch Oxidation seiner Vorstufe, dem Leuko-1,4-diaminoanthrachinon, in konzentrierter Schwefelsäure herstellt und ohne Zwischenisolierung in Wasser verpastet. Die Oxidation erfolgt vorzugsweise mit Braunstein, Chlor, Sulfurylchlorid oder Brom bei 90-110° C wie in den DE-PS Nrn. 625759 und 627482 beschrieben.

*Beispiel 1:*

52,0 g 1,4-Diaminoanthrachinon (92%ig) und 47,0 g 1-Aminoanthrachinon (98%ig) werden in 512 g 96%iger $H_2SO_4$ gelöst, und diese Lösung wird unter gutem Rühren innerhalb von 30 min in 460 g Wasser getropft. Nach Kühlen auf ca. 15° C trägt man unter gutem Rühren innerhalb von ca. 3 h 110,0 g Kaliumperoxodisulfat ein und lässt den Ansatz sich langsam auf 20° C erwärmen. Man rührt 2-3 h bei ca. 20° C, gibt dann die Schmelze in eine Mischung aus 600 ml Wasser und 150 ml 40%ige $NaHSO_3$-Lösung und erhitzt nach Zugabe eines Entschäumers in 30 min auf 80-90° C. Nach 30 min bei 80-90° C wird heiss abgesaugt, mit Wasser neutral gewaschen und bei 100° C getrocknet. Man erhält 97,4 g 4,4'-Diamino-1,1'-dianthrimid (81%ig), das entspricht 86% der Theorie.

*Beispiel 2:*

Eine Lösung von 52,0 g 1,4-Diaminoanthrachinon (92%ig) und 47,0 g 1-Aminoanthrachinon (98%ig) in 410 g 96%iger $H_2SO_4$ wird in 410 g Wasser eingetropft. In die rotorange Paste trägt man bei 40-50° C innerhalb von 1 h 95,0 g Kaliumperoxodisulfat ein, lässt noch ca. 30 min nachrühren und saugt ab. Der Nutschkuchen wird neutral gewaschen und anschliessend kurz in einer Mischung aus 100 ml 40%iger $NaHSO_3$-Lösung und 400 ml Wasser angerührt. Dann wird abgesaugt, mit Wasser gewaschen und bei 100° C getrocknet. Man isoliert 96,5 g 4,4'-Diamino-1,1'-dianthrimid (84%ig), das entspricht 88% der Theorie.

*Beispiel 3:*

In eine Lösung von 52,0 g Leuko-1,4-diaminoanthrachinon (94%ig) in 410 g 96%iger $H_2SO_4$ wird bei 100° C solange Chlor eingeleitet, bis die Leukoverbindung praktisch vollständig verschwunden ist. Überschüssiges Chlor sowie Chlorwasserstoff werden mit Luft ausgeblasen. Anschliessend lässt man auf Raumtemperatur abkühlen, trägt dabei 48,0 g 1-Aminoanthrachinon ein und tropft dann die Lösung in 410 g Wasser. Innerhalb von ca. 1 h werden bei 40-50° C portionsweise 95,0 g Kaliumperoxodisulfat eingetragen. Man lässt ca. 30 min nachrühren, saugt ab und wäscht mit Wasser nahezu neutral. Der Nutschkuchen wird mit 300 ml 10%iger $NaHSO_3$-Lösung, dann mit Wasser gewaschen und bei 100° C getrocknet. Man erhält 102,3 g 4,4'-Diamino-1,1'-dianthrimid (79%ig), das entspricht 87% der Theorie.

*Beispiel 4:*

10,6 g 1,4-Diaminoanthrachinon (92%ig) und 15,5 g 1-Aminoanthrachinon-2-sulfosäurenatriumsalz (90%ig) werden in 220 g 96%iger $H_2SO_4$ eingetragen. Die Lösung wird innerhalb von ca. 30 min in 220 g Wasser getropft. Nach Kühlen auf ca. 15° C trägt man unter gutem Rühren 0,5 g Braunstein, dann innerhalb von 2,5 h 22,0 g Kaliumperoxodisulfat ein. Man rührt noch 2-3 h bei 15-20° C, gibt zu der schwarzbraunen Schmelze 15,0 g $SnCl_2 \cdot 2H_2O$ in 30 ml konzentrierter Salzsäure und rührt 1-2 h nach. Dann wird mit 500 g Wasser verdünnt, auf 80-90° C erhitzt, abgesaugt und mit 10%iger $H_2SO_4$, dann mit 50-60° C heissem Wasser neutral gewaschen. Nach Trocknen bei 100° C erhält man 18,7 g bereits recht reine 4,4'-Diamino-1,1'-dianthrimid-3-sulfonsäure, das entspricht 84% der Theorie. Das eingesetzte Kaliumperoxodisulfat kann ohne Nachteil auch durch eine äquivalente Menge Ammoniumperoxodisulfat ersetzt werden.

*Beispiel 5:*

Eine Lösung von 10,6 g 1,4-Diaminoanthrachinon (98%ig) und 17,4 g 1-Aminoanthrachinon-8-sulfonsäurenatriumsalz (80,4%ig) in 220 g 96%iger $H_2SO_4$ wird unter Rühren und Kühlen in 220 g Wasser eingerührt. Nach Kühlen auf 15° C trägt man innerhalb von 2-3 h 22,0 g Kaliumperoxodisulfat ein und rührt noch 3-4 h bei 15-20° C. Dann tropft man 20 ml wässerige $H_3PO_3$-Lösung (73%ig) zu, rührt 30 min und erhitzt nach Zugabe von 6,0 g $FeSO_4 \cdot 7H_2O$ 1-2 h auf 80-90° C. Nach dem Erkalten wird abgesaugt, mit Wasser neutral gewaschen und bei 100° C getrocknet. Man isoliert 19,6 g 4,4'-Diamino-1,1'-dianthrimid-5-sulfonsäure (ca. 90%ig).

*Beispiel 6:*

Eine Lösung von 10,0 g 1,4-Diaminoanthrachinon (92%ig) und 11,3 g 8-Amino-1-chloranthrachinon (89%ig) in 180 g 96%iger $H_2SO_4$ wird in 30 min zu 180 g Wasser getropft. Nach Kühlen auf 10-15° C trägt man innerhalb von 2 h 21,0 g Kaliumperoxodisulfat ein und rührt 3-4 h bei 15° C nach. Dann tropft man unter gutem Rühren 40 ml wässerige $NaHSO_3$-Lösung (40%ig) zu, lässt 0,5-1 h bei 20-25° C nachrühren und erhitzt dann 30 min unter Zutropfen von 30 ml wässeriger $NaHSO_3$-Lösung (40%ig) auf 80-90° C. Es wird heiss abgesaugt, mit heissem Wasser neutral gewaschen und bei 100° C getrocknet. Ausbeute: 19,6 g Rohprodukt. Nach Reinigung über das Sulfat erhält man 15,6 g 5-Chlor-4,4'-diamino-1,1' dianthrimid, das entspricht 83% der Theorie bezogen auf 1,4-Diaminoanthrachinon.

*Beispiel 7:*

Eine Lösung von 10,6 g 1,4-Diaminoanthrachinon (92%ig) und 15,3 g 5-Amino-1,4-dichloranthrachinon (82%ig) in 180 g 96%iger Schwefelsäure wird unter Kühlen in 180 g Wasser getropft. Bei 15-20° C trägt man in die Schmelze 23,0 g Kaliumperoxodisulfat ein und lässt 2-3 h bei 15-20° C nachrühren. Die dunkle Schmelze giesst man in eine Mischung aus 500 ml Wasser und 200 ml 40%iger $NaHSO_3$-Lösung und erhitzt nach kurzem Durchrühren 0,5-1 h auf 80-90° C. Es wird heiss abgesaugt, mit heissem Wasser neutral gewaschen und bei 100° C getrocknet. Aus 23,8 g Rohprodukt isoliert man nach Reinigung über das Sulfat 16,1 g reines 5,8-Dichlor-4,4'-diamino-1,1'-diathrimid, das entspricht 74% der Theorie.

*Beispiel 8:*

Eine Lösung von 10,6 g 1,4-Diaminoanthrachinon (92%ig) und 11,9 g 1,5-Diamino-4-chloranthrachinon (98%ig) in 220 g 96%iger $H_2SO_4$ wird in 230 g Wasser verpastet, die Schmelze mit 22,0 g Kaliumperoxodisulfat oxidiert und entsprechend Beispiel 5 aufgearbeitet. Man erhält 21,9 g Rohprodukt, nach Reinigung über das Sulfat 15,4 g geringfügig verunreinigtes 5-Chlor-4,4', 8-triamino-1,1'-dianthrimid.

*Beispiel 9:*

Eine Lösung von 10,0 g 1,4-Diaminoanthrachinon (92%ig) und 10,3 g 1-Amino-2-methylanthrachinon (91,5%ig) in 180 g 96%iger $H_2SO_4$ wird unter Kühlen in 170 g Wasser getropft. Bei 15° C werden 21,0 g Kaliumperoxodisulfat innerhalb von 2-3 h eingetragen, und die dunkle Schmelze wird 2-3 h nachgerührt. Die Aufarbeitung und Reinigung über das Sulfat entsprechend Beispiel 5 ergibt 20,5 g Rohprodukt und 12,3 g reines 3-Methyl-4,4'-diaminodianthrimid, das entspricht 67% der Theorie.

*Beispiel 10:*

Eine Lösung von 12,2 g 1,4-Diaminoanthrachinon (92%ig) und 13,8 g 1-Methylaminoanthrachinon (89%ig) in 220 g 96%iger $H_2SO_4$ wird in 210 g Wasser verpastet. Bei 15° C werden 21,0 g Kaliumperoxodisulfat innerhalb von 2-3 h eingetragen, und die dunkle Schmelze wird 2-3 h nachgerührt. Dann gibt man 16,0 g $SnCl_2 \cdot 2H_2O$ in 30 ml konz. Salzsäure zu, erhitzt nach 1 h kurz auf 80-90° C, saugt ab und wäscht mit 20%iger $H_2SO_4$. Man erhält 22,8 g 4-Amino-4'-methylamino-1,1'-dianthrimid (ca. 85-90%ig).

*Beispiel 11:*

Eine Lösung von 10,6 g 1,4-Diaminoanthrachinon (92%ig) und 14,0 g 1-Phenylaminoanthrachinon (91%ig) in 220 g 96%iger $H_2SO_4$ wird in 220 g Wasser verpastet. Bei 15° C werden 22,0 g Kaliumperoxodisulfat innerhalb von 2-3 h eingetragen. Nach 2-3 h Rühren gibt man die Schmelze in ein Gemisch von 300 ml Wasser und 100 ml 40%iger $NaHSO_3$-Lösung und erhitzt 1 h auf 80-90° C. Es wird abgesaugt, mit 30%iger $H_2SO_4$ gewaschen, dann mit heissem Wasser neutral gewaschen und bei 100° C getrocknet. Man erhält 15,6 g praktisch reines 4-Amino-4'-phenylamino-1,1-dianthrimid.

*Beispiel 12:*

Eine Lösung von 10,6 g 1,4-Diaminoanthrachinon (92%ig) und 10,6 g 1,8-Diaminoanthrachinon (96%ig) in 200 g 96%iger $H_2SO_4$ wird in 210 g Wasser verpastet, und die Schmelze mit 22,0 g Kaliumperoxodisulfat bei 15° C oxidiert. Die Aufarbeitung entsprechend Beispiel 5 ergibt 22,0 g Rohprodukt und nach Reinigung über das Sulfat 16,2 g weitgehend reines 4,4',5-Triamino-1,1'-dianthrimid.

*Beispiel 13:*

Eine Lösung von 22,0 g 1,4-Diaminoanthrachinon (92%ig) und 10,2 g 1,8-Diaminoanthrachinon (96%ig) in 220 g 96%iger $H_2SO_4$ wird unter Kühlen in eine Mischung aus 220 g Wasser und 100 g 50%iger $H_2SO_4$ getropft. Bei ca. 10° C werden in 5 h 45,0 g Kaliumperoxodisulfat eingetragen, und die dunkle Schmelze wird 10 h bei 10-15° C gerührt. Bei 15-20° C tropft man 100 ml 40%ige $NaHSO_3$-Lösung zu, rührt 30 min bei 15-20° C, gibt 10,0 g $FeSO_4 \cdot 7H_2O$ zu und erhitzt nach 2-3 h auf 80° C. Er wird heiss abgesaugt, mit heissem Wasser neutral gewaschen und bei 100° C getrocknet. Man isoliert 30,8 g Produkt, das neben dem Hauptprodukt, dem 4',4",4,5-Tetramino-1,1',8,1"-Trianthrimid, noch 20-30% Triaminodianthrimid enthält.

*Beispiel 14:*

Eine Lösung von 10,6 g 1,4-Diaminoanthrachinon (92%ig) und 10,0 g 1,5-Diaminoanthrachinon (99%ig) in 200 g 96%iger $H_2SO_4$ wird in 200 g Wasser verpastet, und die Schmelze bei 10-15° C mit 24,0 g Kaliumperoxodisulfat oxidiert. Die Aufarbeitung entsprechend Beispiel 5 ergibt 17,5 g 4,4',8-Triamino-1,1'-dianthrimid, das noch mit wenig Aminopolyanthrimiden verunreinigt ist.

*Beispiel 15:*

Eine Lösung von 12,2 g 1,4-Diamino-5-nitroanthrachinon (93%ig) und 9,6 g 1-Aminoanthrachinon (98%ig) in 200 g 90%iger $H_2SO_4$ wird in 200 g Wasser verpastet. Nach Kühlen auf 10° C werden 21,0 g Kaliumperoxodisulfat in 2-3 h eingetragen, und die Schmelze wird bei 10-15° C ca. 2 h nachgerührt. Man gibt dann 15,0 g Hydrochinon zu, erhitzt nach ca. 30 min kurz auf 50-60° und saugt nach Erkalten ab. Der Nutschkuchen wird zunächst mit 40%iger $H_2SO_4$, dann mit heissem Wasser neutral gewaschen und bei 100° C getrocknet. Man erhält so 17,4 g einer Mischung der Isomeren 5-Nitro-4,4'-diamino-1,1'-dianthrimid und 8-Nitro-4,4'-diamino-1,1'-dianthrimid; das entspricht 86% der Theorie.

*Beispiel 16:*

Eine Lösung von 12,5 g 1,4-Diamino-2,3-dichloranthrachinon (98%ig) und 9,6 g 1-Aminoanthrachinon (98%ig) in 180 g 96%iger Schwefelsäure wird in 180 g Wasser eingerührt. Nach Kühlen auf 10-15° C werden 22,0 g Kaliumperoxodisulfat in 2-3 h eingetragen, und die Schmelze wird bei 15-20° C 1-2 h nachgerührt. Die Aufarbeitung und Reinigung analog Beispiel 5 ergibt 17,7 g 2,3-Dichlor-4,4'-diamino-1,1'-dianthrimid.

*Beispiel 17:*

Eine Lösung von 15,0 g 1,4-Diamino-2,3-dicyanoanthrachinon (87%ig) und 10,5 g 1-Aminoanthrachinon (98%ig) in 230 g 96%iger $H_2SO_4$ wird unter Kühlen in 220 g Wasser eingerührt. Bei 10° C werden in 2 h 25,0 g Kaliumperoxodisulfat eingetragen. Nach 4 h bei 10-15° C werden 20,0 g $FeSO_4 \cdot 7H_2O$ zugegeben, und die Schmelze wird 4 h bei 20-25° C gerührt. Nach Absaugen, Neutralwaschen mit Wasser und Trocknen bei 100° C erhält man 24,2 g Rohprodukt und nach Reinigung über das Sulfat 17,9 g 2,3-Dicyano-4,4'-diamino-1,1'-dianthrimid; das entspricht 78% der Theorie.

## Patentansprüche

1. Verfahren zur Herstellung von 4,4'-Diamino-1,1'-dianthrimiden, dadurch gekennzeichnet, dass man ein Gemisch aus einem gegebenenfalls substituierten 1,4-Diaminoanthrachinon und einem gegebenenfalls substituierten 1-Aminoanthrachinon in 30-60%iger $H_2SO_4$, vorzugsweise 40-60%iger $H_2SO_4$, mit Peroxomonoschwefelsäure oder Peroxodischwefelsäure, die vorzugsweise in Form der Alkali- oder Ammoniumsalze eingesetzt werden, oxidiert und dass man anschliessend den Ansatz reduziert.

2. Verfahren gemäss Anspruch 1, dadurch gekennzeichnet, dass man die Ausgangskomponenten im Molverhältnis gegebenenfalls substituiertes 1-Aminoanthrachinon zu gegebenenfalls substituiertes 1,4-Diaminoanthrachinon wie 0,9 : 1 bis 1,4 : 1, bevorzugt wie 1 : 1 bis 1,1 : 1 einsetzt.

3. Verfahren gemäss den Ansprüchen 1 und 2, dadurch gekennzeichnet, dass man ein feinteiliges Gemisch der Anthrachinone einsetzt.

4. Verfahren gemäss den Ansprüchen 1 bis 3, dadurch gekennzeichnet, dass man mit Kaliumperoxodisulfat oxidiert.

5. Verfahren gemäss den Ansprüchen 1 bis 4, dadurch gekennzeichnet, dass man in Gegenwart von Schwermetalloxiden oder -salzen oxidiert.

6. Verfahren gemäss den Ansprüchen 1 bis 5, dadurch gekennzeichnet, dass man 1-Aminoanthrachinone der Formel

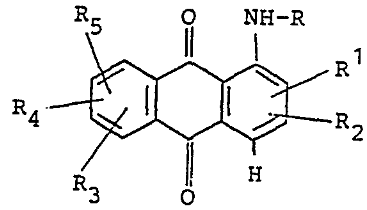

(I)

in der

R Wasserstoff, Alkyl, insbesondere $C_1$-$C_6$-Alkyl, Cycloalkyl, insbesondere $C_3$-$C_7$-Cycloalkyl, Aryl, insbesondere Phenyl und Naphtyl, Aralkyl, insbesondere Phenyl-$C_1$-$C_6$-alkyl, wobei die genannten Kohlenwasserstoffreste substituiert sein können, und

$R_1$, $R_2$, $R_3$, $R_4$, $R_5$ Wasserstoff, Halogen, insbesondere Cl und Br, $-NO_2$, $-SO_3H$, $-COOH$, $-OH$, $-NH_2$, $-CN$, Arylamino, insbesondere Phenyl- und Naphthylamino, Alkylamino, insbesondere $C_1$-$C_6$-Alkylamino, Alkyl, insbesondere $C_1$-$C_6$-Alkyl, Cycloalkyl, insbesondere $C_3$-$C_7$-Cycloalkyl, Aryl, insbesondere Phenyl und Naphthyl, Aralkyl, insbesondere Phenyl-$C_1$-$C_6$-alkyl, Alkoxy, insbesondere $C_1$-$C_6$-Alkoxy und Aryloxy, insbesondere Phenoxy bezeichnen,

einsetzt.

7. Verfahren gemäss den Ansprüchen 1 bis 6, dadurch gekennzeichnet, dass man 1,4-Diaminoanthrachinone der Formel

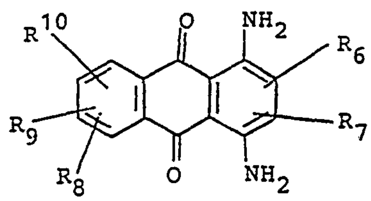

(II)

in der $R_6$, $R_7$, $R_8$, $R_9$, $R_{10}$ Wasserstoff, Halogen, insbesondere Cl und Br, $-NO_2$, $-SO_3H$, $-COOH$, $-OH$, $-NH_2$, $-CN$, Arylamino, insbesondere Phenyl- und Naphthylamino, Alkylamino, insbesondere $C_1$-$C_6$-Alkylamino, Alkyl, insbesondere $C_1$-$C_6$-Alkyl, Cycloalkyl, insbesondere $C_3$-$C_7$-Cycloalkyl, Aryl, insbesondere Phenyl und Naphthyl, Aralkyl, insbesondere Phenyl-$C_1$-$C_6$-alkyl, Alkoxy, insbesondere $C_1$-$C_6$-Alkoxy und Aryloxy, insbesondere Phenoxy bezeichnen,

einsetzt.

8. Verfahren gemäss den Ansprüchen 1 bis 7, dadurch gekennzeichnet, dass man ein 1-Aminoanthrachinon der Formel (I), in der R Wasserstoff und $R_1$, $R_2$, $R_3$, $R_4$, $R_5$ Wasserstoff, Cl, Br, $-SO_3H$, $-COOH$, $-OH$, $-NH_2$, $-CN$, $-NO_2$, $C_1$-$C_4$-Alkyl, insbesondere Methyl und Ethyl, Phenyl, $C_1$-$C_4$-Alkylamino, Phenylamino, bezeichnen, und ein 1,4-Diaminoanthrachinon der Formel (II), in der $R_6$, $R_7$, $R_8$, $R_9$, $R_{10}$ Wasserstoff, Cl, Br, $-SO_3H$, $-COOH$, $-OH$, $-NH_2$, $-NO_2$, $C_1$-$C_4$-Alkyl, insbesondere Methyl und Ethyl, $C_1$-$C_4$-Alkylamino, Phenylamino, bezeichnen, einsetzt.

9. Verfahren gemäss den Ansprüchen 1 bis 5, dadurch gekennzeichnet, dass man Gemisch aus 1,4-Diaminoanthrachinon und 1-Aminoanthrachinon einsetzt.

10. Verfahren gemäss den Ansprüchen 1 bis 9, dadurch gekennzeichnet, dass man das verwendete 1,4-Diaminoanthrachinon durch Oxidation von Leuko-1,4-diaminoanthrachinon in Schwefelsäure herstellt und ohne Zwischenisolierung nach Verpastung mit 1-Aminoanthrachinon umsetzt.

## Revendications

1. Procédé de production de 4,4'-diamino-1,1'-dianthrimides, caractérisé en ce qu'on oxyde un mélange d'une 1,4-diaminoanthraquinone éventuellement substituée et d'une 1-aminoanthraquinone éventuellement substituée dans $H_2SO_4$ à 30-60%, de préférence dans $H_2SO_4$ à 40-60%, avec l'acide peroxomonosulfurique ou peroxodisulfurique que l'on utilise avantageusement sous la forme des sels de métaux alcalins ou d'ammonium, et en ce qu'on réduit ensuite le mélange réactionnel.

2. Procédé suivant la revendication 1, caractérisé en ce qu'on utilise les composants de départ dans un rapport molaire de la 1-aminoanthraquinone éventuellement substituée à la 1,4-diaminoanthraquinone éventuellement substituée de 0,9 : 1 à 1,4 : 1, de préférence de 1 : 1 à 1,1 :1.

3. Procédé suivant les revendications 1 et 2, caractérisé en ce qu'on utilise un mélange finement divisé des anthraquinones.

4. Procédé suivant les revendications 1 à 3, caractérisé en ce qu'on effectue l'oxydation avec le peroxodisulfate de potassium.

5. Procédé suivant les revendications 1 à 4, caractérisé en ce qu'on effectue l'oxydation en présence d'oxydes ou de sels de métaux lourds.

6. Procédé suivant les revendications 1 à 5, caractérisé en ce qu'on utilise des 1-aminoanthraquinones de formule

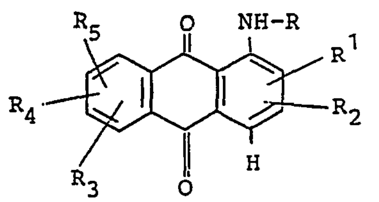

(I)

dans laquelle

R représente l'hydrogène, un reste alkyle, notamment alkyle en $C_1$ à $C_6$, cycloalkyle, notamment cycloalkyle en $C_3$ à $C_7$, aryle, notamment phényle et naphtyle, aralkyle, notamment phényl(alkyle en $C_1$ à $C_6$), les restes hydrocarbonés mentionnés pouvant être substitués, et

$R_1$, $R_2$, $R_3$, $R_4$, $R_5$ représentent l'hydrogène, un halogène, notamment Cl et Br, un reste $-NO_2$, $-SO_3H$, $-COOH$, $-OH$, $-NH_2$, $-CN$, arylamino, notamment phényl- et naphtylamino, alkylamino, notamment (alkyle en $C_1$ à $C_6$)-amino, alkyle, notamment alkyle en $C_1$ à $C_6$, cycloalkyle, notamment cycloalkyle en $C_3$ à $C_7$, aryle, notamment phényle et naphtyle, aralkyle, notamment phényl(alkyle en $C_1$ à $C_6$), alkoxy, notamment alkoxy en $C_1$ à $C_6$ et aryloxy, notamment phénoxy.

7. Procédé suivant les revendications 1 à 6, caractérisé en ce qu'on utilise des 1,4-diaminoanthraquinones de formule

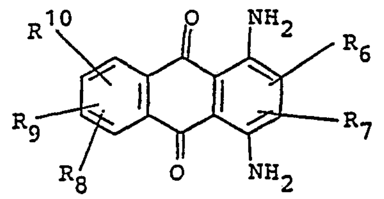

(II)

dans laquelle $R_6$, $R_7$, $R_8$, $R_9$, $R_{10}$ représentent l'hydrogène, un halogène, notamment Cl et Br, un reste $-NO_2$, $-SO_3H$, $-COOH$, $-OH$, $-NH_2$, $-CN$, arylamino, notamment phényl- et naphtylamino, alkylamino, notamment (alkyle en $C_1$ à $C_6$)-amino, alkyle, notamment alkyle en $C_1$ à $C_6$, cycloalkyle, notamment cycloalkyle en $C_3$ à $C_7$, aryle, notamment phényle et naphtyle, aralkyle, notamment phényl(alkyle en $C_1$ à $C_6$), alkoxy, notamment alkoxy en $C_1$ à $C_6$ et aryloxy, notamment phénoxy.

8. Procédé suivant les revendications 1 à 7, caractérisé en ce qu'on utilise une 1-aminoanthraquinone de formule (I), dans laquelle R représente l'hydrogène et $R_1$, $R_2$, $R_3$, $R_4$, $R_5$ représentent l'hydrogène, Cl, Br, un reste $-SO_3H$, $-COOH$, $-OH$, $-NH_2$, $-CN$, $-NO_2$, alkyle en $C_1$ à $C_4$, notamment méthyle et éthyle, phényle, (alkyle en $C_1$ à $C_4$)-amino, phénylamino, et une 1,4-diaminoanthraquinone de formule (II), dans laquelle $R_6$, $R_7$, $R_8$, $R_9$, $R_{10}$ représentent l'hydrogène, Cl, Br, $-SO_3H$, $-COOH$, $-OH$, $-NH_2$, $-CN$, $-NO_2$, un groupe alkyle en $C_1$ à $C_4$, notamment méthyle et éthyle, un groupe (alkyle en $C_1$ à $C_4$)-amino, phénylamino.

9. Procédé suivant les revendications 1 à 5, caractérisé en ce qu'on utilise un mélange de 1,4-diaminoanthraquinone et de 1-aminoanthraquinone.

10. Procédé suivant les revendications 1 à 9, caractérisé en ce qu'on prépare la 1,4-diaminoanthraquinone utilisée par oxydation de leuco-1,4-diaminoanthraquinone dans l'acide sulfurique et en ce qu'on la fait réagir sans isolement intermédiaire après mise en pâte avec la 1-aminoanthraquinone.

## Claims

1. Process for the preparation of 4,4'-diamino-1,1'-dianthrimides, characterised in that a mixture of an optionally substituted 1,4-diaminoanthraquinone and an optionally substituted 1-aminoanthraquinone in 30-60% strength $H_2SO_4$, preferably 40-60% strength $H_2SO_4$, is oxidised with peroxomonosulphuric acid or peroxodisulphuric acid, which are preferably employed in the form of the alkali metal or ammonium salts, and the product is then reduced.

2. Process according to Claim 1, characterised in that the starting components are employed in the molar ratio of optionally substituted 1-aminoanthraquinone to optionally substituted 1,4-diaminoanthraquinone of 0.9 : 1 to 1.4 : 1, preferably of 1 : 1 to 1.1 : 1.

3. Process according to Claims 1 and 2, characterised in that a finely divided mixture of the anthraquinones is employed.

4. Process according to Claims 1 to 3, characterised in that oxidation is carried out with potassium peroxodisulphate.

5. Process according to Claims 1 to 4, characterised in that oxidation is carried out in the presence of heavy metal oxides or salts.

6. Process according to Claims 1 to 5, characterised in that 1-aminoanthraquinones of the formula

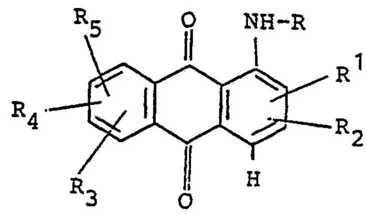

(I)

in which

R designates hydrogen, alkyl, in particular $C_1$-$C_6$-alkyl, cycloalkyl, in particular $C_3$-$C_7$-cycloalkyl, aryl, in particular phenyl and naphthyl, aralkyl, in particular phenyl-$C_1$-$C_6$-alkyl, it being possible for the hydrocarbon radicals mentioned to be substituted, and

$R_1$, $R_2$, $R_3$, $R_4$ and $R_5$ designate hydrogen, halogen, in particular Cl and Br, $-NO_2$, $-SO_3H$, $-COOH$, $-OH$, $-NH_2$, $-CN$, arylamino, in particular phenylamino and naphthylamino, alkylamino, in particular $C_1$-$C_6$-alkylamino, alkyl, in particular $C_1$-$C_6$-alkyl, cycloalkyl, in particular $C_3$-$C_7$-cycloalkyl, aryl, in particular phenyl and naphthyl, aralkyl, in particular phenyl-$C_1$-$C_6$-alkyl, alkoxy, in particular $C_1$-$C_6$-alkoxy and aryloxy, in particular phenoxy, are employed.

7. Process according to Claims 1 to 6, characterised in that 1,4-diaminoanthraquinones of the formula

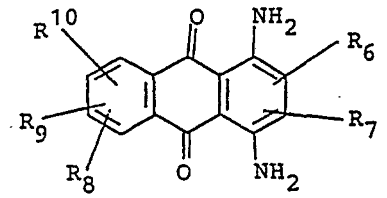

(II)

in which $R_6$, $R_7$, $R_8$, $R_9$, and $R_{10}$ designate hydrogen, halogen, in particular Cl and Br, $-NO_2$, $-SO_3H$, $-COOH$, $-OH$, $-NH_2$, $-CN$, arylamino, in particular phenylamino and naphthylamino, alkylamino, in particular $C_1$-$C_6$-alkylamino, alkyl, in particular $C_1$-$C_6$-alkyl, cycloalkyl, in particular $C_3$-$C_7$-cycloalkyl, in particular phenyl and naphthyl, aralkyl, in particular phenyl-$C_1$-$C_6$-alkyl, alkoxy, in particular $C_1$-$C_6$-alkoxy and aryloxy, in particular phenoxy, are employed.

8. Process according to Claims 1 to 7, characterised in that a 1-aminoanthraquinone of the Formula (I), in which R designates hydrogen and $R_1$, $R_2$, $R_3$, $R_4$ and $R_5$ designate hydrogen, Cl, Br, $-SO_3H$, $-COOH$, $-OH$, $-NH_2$, $-CN$, $-NO_2$, $C_1$-$C_4$-alkyl, in particular methyl and ethyl, phenyl, $C_1$-$C_4$-alkylamino and phenylamino, and a 1,4-diaminoanthraquinone of the Formula (II), in which $R_6$. $R_7$, $R_8$, $R_9$ and $R_{10}$ designate hydrogen, Cl, Br, $-SO_3H$, $-COOH$, $-OH$, $-NH_2$, $-CN$, $-NO_2$, $C_1$-$C_4$-alkyl, in particular methyl and ethyl, $C_1$-$C_4$-alkylamino and phenylamino, are employed.

9. Process according to Claims 1 to 5, characterised in that a mixture of 1,4-diaminoanthraquinone and 1-aminoanthraquinone is employed.

10. Process according to Claims 1 to 9, characterised in that the 1,4-diaminoanthraquinone used is prepared by oxidation of leuco-1,4-diaminoanthraquinone in sulphuric acid and is reacted without intermediate isolation and after converting to a paste with 1-aminoanthraquinone.